# EUROPEAN PATENT APPLICATION

(11) **EP 1 622 050 A1**
(43) Date of publication of application: **01.02.2006**
(21) Application number: 05254352.7
(22) Date of filing: 12.07.2005
(51) Int. Cl.: G06F 17/30

(54) **Managing feedback data**

(30) Priority: 28.07.2004 US 902456
(71) Applicant: Hewlett-Packard Development Company, L.P., Houston, Texas 77070 (US)
(72) Inventor: Vaszary, Mark K., Roseville, CA 95678 (US); Nelson, Douglas R., Cameron Park, CA 95682 (US)
(74) Representative: Jackson, Richard Eric

(57) **Abstract**

A method for managing user feedback data is disclosed. The method includes receiving (202) the user feedback data. The method also includes categorizing (204) the user feedback data using a data transformation engine, thereby creating categorized user feedback data, whereby a first data item of the user feedback data that fails to be categorized in accordance with a set of existing categorization rules by the data transformation engine is flagged for attention.

## Description

### BACKGROUND OF THE INVENTION

User feedback has long been an important source of information for software and hardware developers. In the development of software, for example, it is advantageous to fumish a pre-release version of the product to a group of testers for some period of time in order to obtain feedback. The feedback data obtained by the tester based on issues encountered by the testers during the pre-release pilot testing program is analyzed in order to improve the software product before the actual product release date.

As software products become more complex and the time-to-market pressure becomes more acute, it is more important than ever to accurately and timely analyze the vast quantity of user feedback data and to quickly incorporate important useful suggestions into the product to be released. For example, a modem software release may include thousands or millions of lines of code for implementing hundreds of new features, each of which needs to be tested and perfected before release. Each feature may be tested by dozens or hundreds of testers, each of which may generate one or more feedback suggestions.

Beside the sheer volume of user feedback data, one issue that has arisen with user feedback is the accuracy of the data collection and analysis processes. In the software field, for example, testers tend to be technically sophisticated and tend to place less emphasis on the formality of the feedback process than on the actual content of the feedback. These testers tend to have their favorite ways to communicate their feedback to the manufacturer. Although the testers should ideally employ a single reporting tool (such as a pre-defined feedback form) to render the data collection and analysis task more efficient for the manufacturer, such has not been the case in practice.

Enforcing a policy that requires the testers to use a single reporting tool (such as the aforementioned pre-defined feedback form) has been largely unsuccessful in practice. For one, product testing tends to be a volunteer activity or one that involves little compensation. There are many reasons for not wanting to richly compensate testers, such as ensuring that the feedback data is free of bias due to monetary reasons. Accordingly, it is difficult to enforce a feedback policy on testers, who are not compensated or who are compensated very little. Further, good testers are difficult to find. Accordingly, manufacturers have found that they need to accommodate the communication styles of the testers instead of the other way around.

Thus, in practice, it is not unusual to receive user feedback in multiple formats and via different communication methods. For example, user feedback may be received in a text document, in an email, in an instant message, in a voice mail, in a facsimile transmission, etc. The various user feedback formats and communication methods have rendered it difficult to accurately and timely collect the user feedback data for analysis.

Another issue that has arisen with user feedback is the speed with which the issues raised by the testers can be synthesized and acted upon. Once the raw user feedback data is received and entered into a database for analysis, it is important to quickly filter through the data to separate frivolous suggestions from those that are truly valuable. The faster the raw user feedback data can be synthesized into meaningful analysis from which actionable courses of action may be undertaken, the more likely the chance that the user suggestions can be incorporated into the released product by the development team. Given the fact that developers are already under pressure to quickly bring the finished software product to market, unless the issues brought up through user feedback can be quickly and accurately transformed into actionable courses of action, the user feedback data will be ignored and much of the user feedback value will be lost.

In the past, user feedback analysis involves employing technically knowledgeable human analysts to sift through the large volume of feedback data and to ascertain which suggestion(s) should be forwarded to the development team for consideration. As the software product becomes more sophisticated and the volume of user feedback data increases, it has become apparent that there are serious limitations with the current paradigm for user feedback analysis.

For example, due to the vast volume of user feedback data received and the short time-to-market requirement, a large number of human analysts is required to sift through the user feedback data in a timely fashion. Beside the high cost of employing such a large number of human analysts, different human analysts may have different perspectives and personal bias. Accordingly, an issue which may be important to an analyst may escape notice by another analyst. In fact, consistency has been a serious issue with analyzing user feedback data. If fewer analysts are employed, the cost can be lowered and the analysis result may be more consistent. However, it may not be possible to adequately analyze the vast volume of user feedback data using fewer analysts, particularly if the time period between pilot testing and product release is compressed to meet a short time-to-market schedule.

### SUMMARY OF INVENTION

The invention relates, in one embodiment, to a method for managing user feedback data. The method includes receiving the user feedback data. The method also includes categorizing the user feedback data using a data transformation engine, thereby creating categorized user feedback data, whereby a first data item of the user feedback data that fails to be categorized in accordance with a set of existing categorization rules by the data transformation engine is flagged for attention.

In another embodiment, the invention relates to an article of manufacture comprising a program storage medium having computer readable code embodied therein, the computer readable code being configured to manage user feedback data. There is included computer readable code for receiving the user feedback data. There is also included computer readable code for categorizing the user feedback data using a data transformation engine, thereby creating categorized user feedback data, whereby a first data item of the user feedback data that fails to be categorized in accordance with a set of existing categorization rules by the data transformation engine is flagged for attention.

In yet another embodiment, the invention relates to an arrangement for managing user feedback data. The invention includes means for receiving the user feedback data and means for categorizing the user feedback data, thereby creating categorized user feedback data. The invention further includes means for analyzing the categorized user feedback data, thereby creating a set of analysis results. The invention additionally includes means for presenting at least one analysis result of the set of analysis results for viewing.

These and other features of the present invention will be described in more detail below in the detailed description of the invention and in conjunction with the following figures.

### BRIEF DESCRIPTION OF THE DRAWINGS

The present invention is illustrated by way of example, and not by way of limitation, in the figures of the accompanying drawings and in which like reference numerals refer to similar elements and in which:

Fig. 1 shows, in accordance with an embodiment of the present invention, an arrangement for managing user feedback data, including a user feedback data transformation engine, a categorized user feedback data analysis engine, and an analysis result display panel on a computer display.

Fig. 2 shows, in accordance with an embodiment of the present invention, the steps for managing user feedback data.

Fig. 3 shows, in accordance with an embodiment of the present invention, the steps for categorizing a user feedback data item.

### DETAILED DESCRIPTION OF EMBODIMENTS

The present invention will now be described in detail with reference to a few embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known process steps and/or structures have not been described in detail in order to not unnecessarily obscure the present invention.

In accordance with embodiments of the present invention, there are provided methods and arrangements for managing user feedback data in a manner that enables meaningful analysis to be accurately and efficiently obtained therefrom. In an embodiment, there is provided a data transformation engine for categorizing the user feedback data, which may be received in various formats using various communication techniques into categorized user feedback data. The categorized user feedback data is then stored into a database for analysis and reporting.

The data transformation engine is capable of handling data received in various formats and received using a variety of communication techniques. For example user feedback data in text files, XML files, emails, transcriptions of voicemails or facsimiles, instant messaging texts, etc., may be received by the data transformation engine, parsed as needed, and categorized using a set of categorization rules. Since the user feedback data is created by different humans, it is expected that there will be cases where one or more user feedback data items cannot be categorized with certainty by the data transformation engine. In these cases, the data transformation engine may defer the categorization and flags that user feedback data item for human intervention. Alternatively, the data transformation engine may provisionally categorize that user feedback data item into a category and then flag that user feedback data item for human intervention. The flag may represent a hyperlinked visual data item that the user may activate (via clicking, for example) to access the user feedback data item under question.

The data transformation engine may include a self-learning feature, which enables the data transformation engine to adapt the categorization rules to handle different types of user feedback data. In an embodiment, self-learning may be accomplished by applying fuzzy logic (which may include the use of neural networking as the term is defined herein) to the categorization process to adapt the categorization rules to handle different types of user feedback data. The use of fuzzy-logic to adapt and solve complex problems is known. Background information on fuzzy logic and machine learning may be found in, for example, Understanding Neural Networks and Fuzzy Logic: Basic Concepts and Applications by Stamatios V. Kartalopoulos (IEEE Press Understanding Science & Technology Series,Wiley-IEEE Press, 1995), and Artificial Intelligence: A Modem Approach by Stuart J. Russell and Peter Norvig (Prentice Hall; 2nd edition 2002).

In another embodiment, self-learning may involve having the data transformation engine applying a rule that is specified by the human operator in resolving a flagged user feedback data item (i.e., a data item that the data transformation engine could not categorize with certainty using its existing categorization rules) to user feedback data items that have similar characteristics in the future.

There is further provided an analysis engine for analyzing the categorized user feedback data using a set of analysis rules. The analysis results outputted by the analysis engine are then displayed in a display panel of a computer display. Some of the analysis results may be displayed as hyperlinked viewable data items. By activating the hyperlink associated with a hyperlinked viewable data item (such as by clicking on that hyperlinked viewable data item), the user may be able to drill down to view the analysis rule employed to obtain the analysis result represented by the hyperlinked viewable data item, for example. As another example, the user may be able to drill down to view the categorized data employed to obtain the analysis result represented by the hyperlinked viewable data item. As another example, the user may be able to drill down to view the raw user feedback data employed to obtain the analysis result represented by the hyperlinked viewable data item.

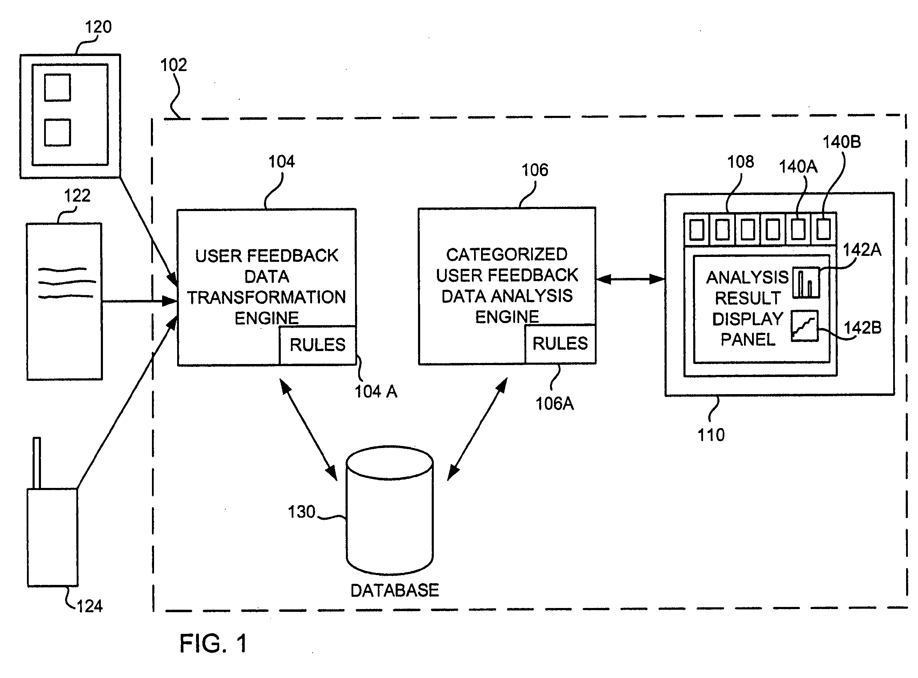

The advantages and features of the invention may be better understood with reference to the figures and discussion that follow. Fig. 1 shows, in accordance with an embodiment of the present invention, an arrangement 102 for managing user feedback data, including a user feedback data transformation engine 104, a categorized user feedback data analysis engine 106, and an analysis result display panel 108 on a computer display 110. User feedback data from a plurality of sources 120, 122, and 124 is received by transformation engine 104. In the example of Fig. 1, source 120 represents a web-based user feedback form. Source 122 represents a text file or an XML file, and source 124 represents a telephone feedback. Other communication methodologies may also be employed (such as instant messaging, facsimile, voice messages, etc.).

Data transformation engine 104 may include a facility to transform the incoming user feedback data from the various sources into a computer-readable format (e.g., by performing computer character recognition on a received facsimile or voice recognition on a voice message, for example). In some cases, a human may be involved to transform the incoming user feedback data into a computer-readable format (e.g., to transcribe certain voice messages that involve a heavy foreign accent into a computer-readable format).

In an embodiment, it is recognized that data collection may be improved by furnishing the tester with easily accessible data entry forms. In an embodiment, each feature of a software product to be tested may be associated with a pop-up window containing one or more feedback forms. The popup window may be activated by the tester while testing that feature. In an embodiment, the popup window already has the data regarding which feature the tester is currently testing, thereby eliminating the need for the tester to enter this piece of information.

Further, the feedback form in the popup window may be customized for its associated feature, rendering the task of providing feedback more efficient and intuitive for the tester. For example, the feedback form associated with the navigation feature of a product being tested may include only fields for comments regarding the navigation feature while the feedback form associated with the plotting feature may include only fields associated with the plotting feature. By providing one or more readily accessible and intuitive feedback forms with each feature under testing, the likelihood that those forms will be used for submitting user feedback is increased. Since feedback data is entered using a factory-provided form with known data fields, data collection and parsing is simplified for the manufacturer (i.e., the company manufacturing the software under testing).

In any case, the user feedback data is parsed and categorized using a set of categorization rules 104A. Parsing may be performed using any parsing technique known in the art including, for example, pattern recognition. The categorization rules may represent any data categorization relevant to the feature being tested and/or the tester providing the feedback and/or other criteria. For example, user feedback regarding the aforementioned navigation feature may be categorized by the identity of the tester, the size of the organization to which the tester belongs, the type of industry to which the tester belongs, the tester's opinion of the tested feature (e.g., good, indifferent, bad, unacceptable), the particular aspect of the tested feature that the tester comments on (e.g., location of navigation buttons, color scheme, clarity of the navigation instructions for the aforementioned navigation feature), etc. Categorization facilitates statistical analysis, which is performed in analysis engine 106. One skilled in the art will recognize that the categories created for a particular feature under testing depend on the specifics of a feature.

Since user feedback data is received from human testers, it is possible that data transformation engine 104 may encounter one or more user feedback data items which it cannot categorize using its current set of categorization rules. In an embodiment, such user feedback data item is set aside and flagged. Thus that user feedback data item will not be taken into account for analysis by analysis engine 106. In another embodiment, transformation engine 104 may make the best guess at matching the feedback data item at issue with a category or already-categorized data associated with a category (using, for example, matching techniques that are currently employed in text search engines). The categorization is provisional in this case and the data item may be flagged. In an embodiment, the flagged user feedback data items are presented as hyperlinked items on computer display 110, and a human operator may select the flagged data items for resolution. Resolution may include, for example, employing an appropriate software tool to categorize a flagged user feedback data item into an existing or a newly created category.

In an embodiment, transformation engine 104 may self-learn by creating new categorization rules for user feedback data items that cannot be categorized using the existing set of categorization rules. For example, the categorization process may be monitored by a self-learn logic block that employs fuzzy logic. This self-learn logic block may make deductions pertaining to successful categorizations and employ those deductions in creating new categorization rules.

In an embodiment, transformation engine 104 may self-learn by noting the categorizations performed by a human operator on the flagged user feedback data items. For example, transformation engine 104 may note that a particular categorization rule and a particular category are employed to categorize a particular flagged user feedback data item. If another user feedback data item having similar categorization characteristics is received subsequently, transformation engine 104 may employ the same categorization rule and/or category in categorizing that received user feedback data item. In a sense, it may be said that a new categorization rule has been created by the transformation engine since the transformation engine has created its own way of handling feedback data items that cannot be categorized otherwise strictly by using the existing categorization rules.

The categorized user feedback data outputted by transformation engine 104 is then stored in a database 130. An analysis engine 106 subsequently operates on the categorized user feedback data to provide a plurality of analysis results, which are then displayed on display panel 108. Generally speaking, the categorized user feedback data is analyzed using statistical analysis techniques associated with analysis rules 106A. For example, one analysis rule may analyze the categorized user feedback data for all feedback that rate the navigation feature as "unacceptable." As another example, one analysis rule may analyze the categorized user feedback data to sort the feedback first by feature, and then by geographical location of the tester, and by the level of technical experience of the tester. One skilled in the art will readily recognize that an unlimited variety of statistical analysis may be specified by the analysis rules. One technique for specifying the analysis rules involves using a high-level database language, such as SQL.

The application of the analysis rules to the categorized user feedback data by data analysis engine 106 results in a plurality of analysis results, which may be displayed in data panel 108 as viewable data items (e.g., 142A and 142B in Fig. 1). For example, a bar graph may show the number of user feedbacks received from a particular group of testers from a particular industry. In the same panel 108, a numerical field may show the number of users who suggest that the location of the navigation button be moved.

A plurality of control buttons 104A and 104B may be provided to allow the user to specify parameters associated with the analysis rules (e.g., limiting the analysis results only to feedback from testers who have at least one year of testing experience), thereby allowing the user to control the analysis results. Other control buttons 104A and 104B may also be employed to control the format of the viewable data items (e.g., graphs versus tables, color, font, location, etc.).

In an embodiment, the viewable data item representing an analysis result is presented as hyperlink. Activating the hyperlink may allow the viewer of panel 108 to access the analysis rule employed to obtain the analysis result associated with the hyperlinked viewable data item and/or the underlying categorized user feedback data used to obtain the analysis result and/or the raw user feedback data used to obtain the analysis result.

In an embodiment, data transformation engine 104 and data analysis engine 106 work in real-time. In other words, these engines continually operate on the incoming user feedback data to give the viewer of panel 108 a continually updated view of the user feedback analysis results. In another embodiment, these engines may execute periodically to update the viewer of panel 108 with an updated view of the user feedback analysis results on a periodic basis.

In an embodiment, an alert threshold may be associated with a particular analysis rule to generate an alert if the analysis result satisfies a condition. For example, an alert threshold may specify that if a specific influential tester rates a feature as unacceptable, an alert be generated so that the feature may be redesigned by the developer. As another example, an alert threshold may specify that if more than 30% of a particular group of testers gives a particular feature an unfavorable rating, an alert be generated. The alert may be a visual indicator in panel 108 or some other visual indicator and/or may be audible in nature. By generating alerts automatically, the chance that a critical user feedback analysis result is overlooked is lessened.

In an embodiment, a business rule specifying a given course of action may be associated with a particular analysis rule to generate an alert if the analysis result satisfies a predefined condition. For example, a business rule may specify that if a specific influential tester/potential customer rates a feature as unacceptable, an email having that tester's raw feedback as an attachment be sent to the head developer, with a duplicate email be sent to the marketing manager so that assurance can be made to that influential tester/potential customer. In this manner, the business rule may be automatically activated whenever the associated analysis result satisfies a predefined condition.

In another embodiment, a business rule may be created to enable issues raised in the feedbacks by testers to be handled automatically without human intervention after the feedbacks are categorized and analyzed to ascertain if they satisfy a predefined condition. For example, suppose there is a problem with the log-in page of a software product under testing. The same issue will be encountered by many testers, and consequently many feedbacks regarding the same issue may be received by the manufacturer. The manufacturer of course wish to appear responsive to such feedbacks. Instead of generating an alert each time such an issue is ascertained in the feedback and having a human responding to the tester, a business rule may be set up to enable an email (or any other form of communication) to be sent to the tester whenever the tester's feedback is found to be directed toward such an issue. The email may inform the tester that the manufacturer is aware of the problem and/or that a proposed solution has been found and/or that the developers are currently working toward a solution. The ability to have a business rule automatically execute in response to categorized feedback is an advantageous labor-saving feature. One skilled in the art will appreciate that the variety of business rules is large and any suitable business rule may be created and associated with a particular analysis rule to be activated when the analysis result satisfies a predefined condition.

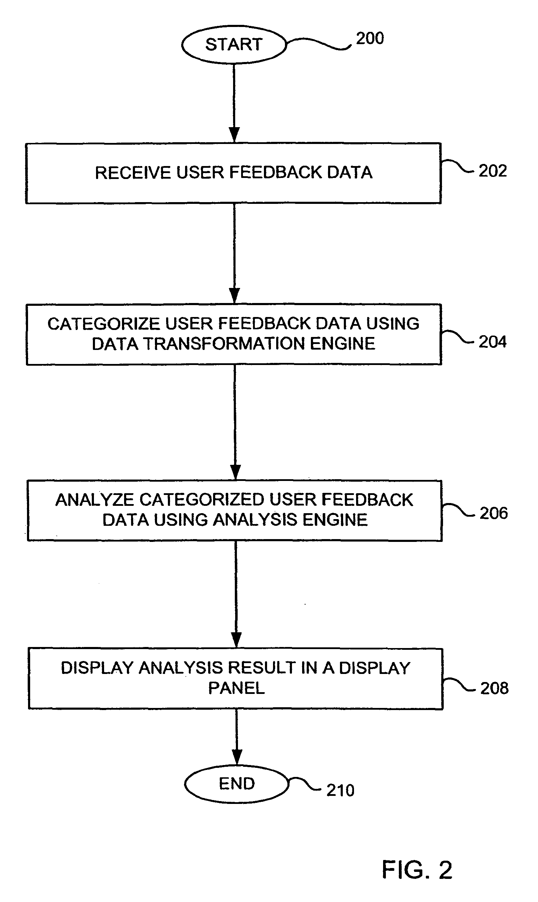

Fig. 2 shows, in accordance with an embodiment of the present invention, the steps for managing user feedback data. In step 202, the user feedback is received from the various sources and transformed into computer-readable data. In step 204, the computer-readable data pertaining to the user feedback is categorized using the aforementioned transformation engine 104. As mentioned, if a user feedback data item cannot be categorized using the existing categorization rules, that user feedback data item may be flagged for attention. In step 206, the categorized user feedback data is analyzed using a set of analysis rules. The analysis may be performed using analysis engine106 as discussed earlier. In step 208, the analysis results are displayed as viewable data items on a display panel on a display screen. If desired, some or all of the viewable data items may be presented as hyperlinked items to allow the viewer of panel 108 to drill down to the underlying analysis rules or the underlying user feedback data.

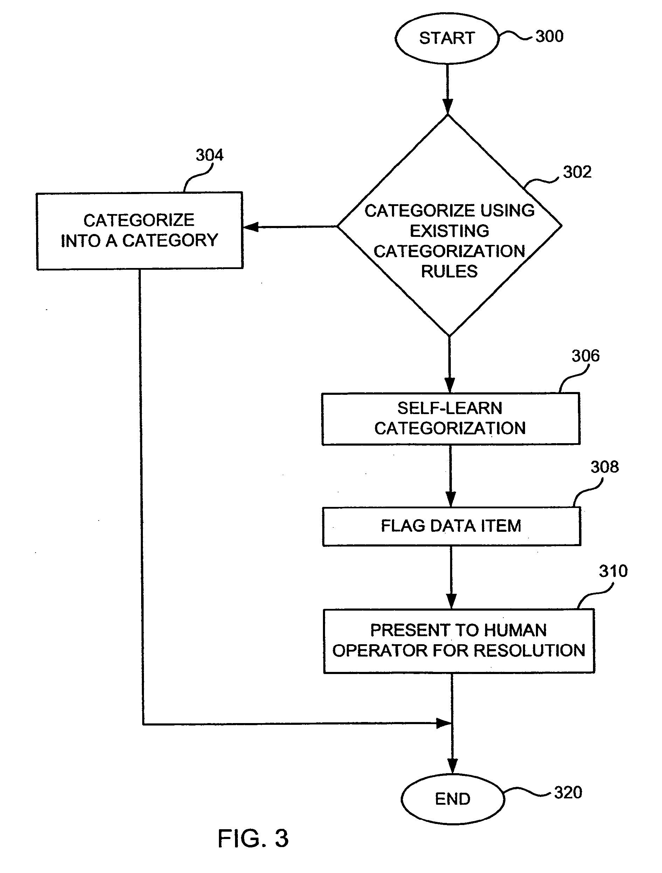

Fig. 3 shows, in accordance with an embodiment of the present invention, the steps for categorizing a user feedback data item. In step 302, it is ascertained whether the existing categorization rules can categorize the user feedback data item. If it is possible to categorize using the existing categorization rules, the user feedback data item is categorized into a category (step 304) and the steps of Fig. 3 ends at step 320. On the other hand, if it is not possible to categorize the user feedback data item using the existing categorization rules, the user feedback data item is passed to an optional self-learn categorization block in step 306 where an attempt is made to categorize the user feedback data item.

As mentioned earlier, the categorization engine may self-learn using for example a fuzzy logic approach to attempt to categorize user feedback data items that are otherwise incapable of being categorized using the existing categorization rules. Alternatively, the categorization engine may attempt to mimic the categorization performed by the human operator for past user feedback data items that have required human intervention.

At any rate, the user feedback data item is flagged in step 308. In one embodiment, if the user feedback data item is categorized by the self-learn block, that user feedback data item is not flagged. In another embodiment, flagging is performed for any user feedback data item that cannot be categorized using the existing categorization rules.

In step 310, the flagged user feedback data item is presented to the human operator for resolution. As mentioned, operator resolution may involve using an appropriate software tool to categorize the user feedback data item into a category and/or to create a categorization rule for handling that user feedback data item and similar user feedback data items in the future. In an embodiment, the categorization rule may be expressed in text form in a text file by the human operator and employed by transformation engine 104 in categorizing incoming user feedback data.

It should be noted that the invention not only encompasses the techniques for managing feedback data but also compasses the physical devices or arrangements that implement the disclosed techniques. Such a device includes, for example, a computer system, a computer network, or any electronic device that manages feedback data. The invention also covers an article of manufacture (such as disk drives, computer memory chips, etc.) having thereon the data storage medium that stores the computer-readable code that implements the disclosed techniques.

While this invention has been described in terms of several embodiments, there are alterations, permutations, and equivalents which fall within the scope of this invention. For example, although the example herein discusses technical feedback in the context of software testing, the invention can be employed to manage feedback data in any situation involving data input from different people in any field (including, for example, marketing, survey, retail sales, customer service, etc.). It should also be noted that there are many alternative ways of implementing the methods and apparatuses of the present invention. It is therefore intended that the following appended claims be interpreted as including all such alterations, permutations, and equivalents as fall within the true spirit and scope of the present invention.

## Claims

1. A method for managing user feedback data, comprising:
receiving said user feedback data;
categorizing said user feedback data using a data transformation engine, thereby creating categorized user feedback data, whereby a first data item of said user feedback data that fails to be categorized in accordance with a set of existing categorization rules by said data transformation engine is flagged for attention.

2. The method of claim 1 further comprising
analyzing said categorized user feedback data, thereby creating a set of analysis results; and
presenting at least one analysis result of said set of analysis results in a panel in a computer display for viewing.

3. The method of claim 2 wherein said at least one analysis result is presented in said panel as a hyperlinked viewable data item.

4. The method of claim 2 further comprising displaying at least one of an analysis rule employed for obtaining said at least one analysis result and a first set of user feedback data items employed to obtain said at least one analysis result if a human viewer viewing said hyperlinked viewable data item activates a hyperlink associated with said hyperlinked viewable data item.

5. The method of claim 2 wherein said panel includes user-configurable controls for permitting a viewer of said panel to modify rules employed to analyze said categorized user feedback data.

6. The method of claim 1 further including flagging an analysis result if said analysis result satisfies a pre-defined condition.

7. The method of claim 6 further comprising providing at least one of an audible alert and a visual alert if said analysis result satisfies said pre-defmed condition.

8. The method of claim 6 further comprising automatically activating a business rule if said analysis result satisfies said pre-defined condition.

9. The method of claim 1 wherein said categorizing engine includes a self-learning feature.

10. The method of claim 9 wherein said self-learning feature is implemented using fuzzy logic.

11. The method of claim 9 wherein said self-learning feature includes incorporating a new categorization rule into said set of categorization rules if said first data item is categorized into a first category with human intervention after said flagging, said new categorization rule applies to a second data item that is similar in categorization characteristics to said first data item to categorize said second data item into said first category.
